# EUROPEAN PATENT SPECIFICATION

(11) **EP 4 335 284 B1**
(45) Date of publication and mention of the grant of the patent: **28.10.2026**
(21) Application number: 22195190.8
(22) Date of filing: 12.09.2022
(51) Int. Cl.: A01G 23/083

(54) **HARVESTER HEAD MODULE**
ERNTEVORSATZMODUL
MODULE DE TÊTE D'ABATTAGE

(43) Date of publication of application: 13.03.2024
(73) Proprietor: Deere & Company, Moline, IL 61265 (US)
(72) Inventor: Alfthan, Arto, Mannheim (DE)
(74) Representative: Reichert, Christian

(56) References cited:
- WO-A1-00/15026
- DE-B- 1 266 559
- US-A1- 2006 021 675
- US-A1- 2006 278 305

## Description

The present invention is a harvester head module for forestry applications, having a braking mechanism.

Harvester head modules are used to fell trees and additionally clean the stem of branches and cut the stem into logs.

Harvester heads are attached to a crane of a forestry vehicle, controlled via control surfaces from a cabin and supplied with hydraulic energy for actuating various mechanisms on the harvester head, e.g., the knives, the feeding mechanism, and the saw mechanism. Additionally, the harvester head can be rotated or tilted via hydraulic mechanisms.

While all these options are usually realized via hydraulic pumps and motors, a switch to electric actuation presents obstacles, as to power supply or cooling. Electric motors are only able to provide torque when the motor is supplied with current or electrical power. The torque required leads to a specific amount of current flowing through the electric motor, leading to heating of the windings and requires transmitting the heat to a heat sink or cooling mechanism.

Especially for high torque applications, this presents a problem, as the electric motor is experiencing the highest torque in slow moving applications or when providing a constant torque with no available rotational operation. In off-road applications such as forestry work vehicles, the handling of trees and logs requires the harvester head module to hold the stem in a fixed position during sawing operations or during movement of the stem when grabbed by the harvester head module. This results in high holding forces and a high torque requirement.

WO0015026A1 shows a method in a delimbing device, which delimbing device comprises a frame structure, at least one supporting means attached in the frame structure in a movable manner to support the tree-trunk and to exert a first force effect on the tree-trunk, actuator means for controlling the position of the supporting means to maintain the first force effect exerted by the supporting means on the tree-trunk.

US2006021675A1 shows a tree harvester assembly which has a pivoting tower which secures the trunk of the tree and may pivot to impart a bending moment upon the tree, thereby permitting easier cutting by a chain saw.

DE1266559B show a tree harvesting apparatus.

US2006278305A1 shows tree handling device, where the tree is fed longitudinally through at least three drive wheels driven by a fixed-displacement hydraulic pump, feeding commences with all drive wheels simultaneously propelling the tree longitudinally through the knife arms and frame.

The present application is aiming to overcome the above stated problems.

The invention is a harvester head module, comprising a chassis, actuated movable knives, movably attached to the chassis, adapted to grab and debranch a tree stem, at least two actuated feeding wheels, movably attached to the chassis, adapted to move around an axis relative to the chassis and to rotate around a center axis, and to contact a surface of the stem and to move the stem relative to the chassis, an actuated chain saw, movably attached to the chassis, adapted to cut the stem, wherein at least one actuating mechanism of the knives comprises an electric motor and a brake mechanism, the brake mechanism adapted to hold the actuating mechanism in a fixed position, when the electric motor is not powered. The brake mechanism is applied when the electric motor is required by the operator not to move. The braking mechanism is holding the knife in place so that the stem is securely held in position. The electric motor does not need to be supplied with current, avoiding heat built up and saving electric power consumption. The electric motor can be dimensioned for less torque requirement, leading to a smaller sized electric motor, resulting in less weight of the overall harvester head module.

According to the invention, the brake mechanism is a disc brake mechanism.

The disc brake can be designed as a power off brake, so that the brake is active when the electric power is off. The disc brake is able to hold large torque amounts and to apply the brake forces quickly with a high deceleration value. The disc brake offers a high lifetime and less complex maintenance. It offers a high durability and can tolerate a reasonable amount of foreign particles so that offers a high safety especially in forest felling applications.

In a further embodiment, the knife actuating mechanism of the knives can be driven by the electric motor, and the brake mechanism is holding the actuating mechanism in place, so that the stem is fixed between the knives, when the chain saw is in cutting operation or when the harvester head module is moving.

The knife actuating mechanism can thus be realized with an electric motor so that the brake mechanism becomes active when the electric motor is switched off. This may happen, when the log is handled by the harvester head module during crane operation and the log is moved with the crane. Also, the feeding operation is regularly stopped when the log is in the correct position within the harvester head module for cutting operation. In this situation, the feeding wheels stop, and the saw is activated. During the cutting, the log must be held in place to achieve correct cutting results. The brake mechanism can thus relief the electric motor to provide torque that would be necessary for achieving the holding operation. As a result, the electric motor is switched off and a heat up of the coils is avoided, omitting the need for additional cooling lines, and increasing lifetime and heat stress of the electric motor.

By another embodiment, the knife actuating mechanism may comprise a gear section.

The gear section can be used to reduce the necessary torque that is provided by the electric motor. Due to the gear section, the electric motor needs to provide less torque, further reducing the possible heat up. With the gear section provided, also the brake mechanism experiences a lower holding torque when the brake is active.

According to a further embodiment, the brake mechanism may be between the gear section and the knife actuating mechanism.

The brake mechanism can be used to block any impact due to torque or force feedback from the knives toward the gear section. The gear section can be designed in regard to less impact on the gear wheels, with less weight or less safety margin, reducing cost and maintenance effort.

In a further embodiment, the brake mechanism may be between the gear section and the electric motor of the knife actuating mechanism.

The brake mechanism can therefore be designed for less holding torque as the gear section further reduces the torque requirements for both the electric motor and the brake mechanism. The brake mechanism can be of lesser size, reducing the amount of weight of the brake mechanism and reducing power consumption.

By another embodiment, the brake mechanism and the electric motor may be adapted to be controlled by a control module of the harvester head module.

The control module can be used to control the simultaneous switch-off of the electric motor and the activation of the brake mechanism. The operator of the harvester head module is relieved from manually controlling the electric motor and applying the brake. This leads to a reduced current flow in the motor, resulting in less heat up and improving durability. With the reduced heat built up an optional cooling system could be completely avoided or reduced in its performance requirements.
Figure 1 shows a current forestry vehicle, e.g., a harvester vehicle;
Figure 2 depicts a harvester head module.

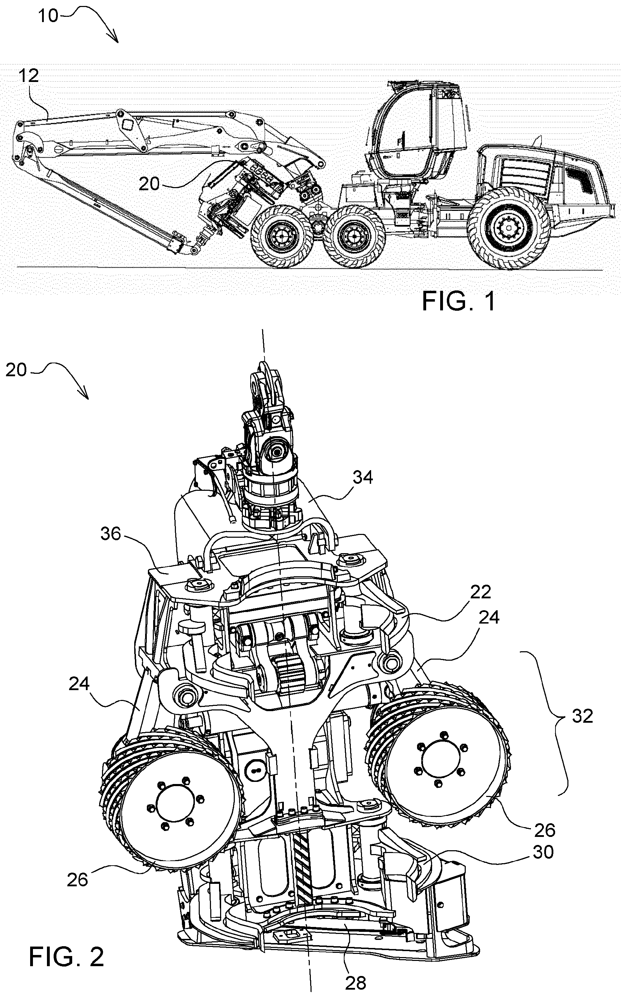

Figure 1 shows a forest harvester vehicle 10. It comprises usually a front and rear chassis which are articulated and a cabin for the operator. The vehicle has a crane 12 to which a timber working device 20, e.g. a harvester head module 20 is attached. The crane 12 is able to rotate and to tilt, further, to extend and to rotate the harvester head module 20. As shown in Fig. 2, for the felling and processing of a tree into logs, the operator extends and maneuvers the crane 12 so that the harvester head module 20 is able to close the upper 22 and/or lower knives 30 around the tree stem. The operator cuts the tree with the integrated saw blade 28 so that the stem falls over and is held at the lower end with the knives 22, 30 of the harvester head module 20. In a next step the actuating mechanism 32 of the feeding wheels 26, consisting of the feeding arms 24 holding the feeding wheels 26, is operated so that the feeding wheels 26 by their gripping surface pull or push the stem through the harvester head module 20, so that the stem can be cut into logs of predetermined length, controlled by the actuating mechanism 32 of the feeding wheels 26.

When the feeding wheels 26 transport the stem through the harvester head module 20, the knives 22, 30 need to maintain a close grip to ensure the stem stays within operational parameters and is kept safely inside the harvester head module 20. Also, the knives 22,30 are used to remove branches and bark from the stem. This leads to the difficulty that a tight grip may remove the branches easily but will at the same time increase the friction of the stem and thus increases the workload on the actuating mechanism 32 of the feeding wheels 26 which leads to a high torque in the actuating mechanism 32 of the feeding wheels 26.

The harvester head module 20 of the present invention is also shown in Figure 2. It has a frame or chassis 36 which is extending along a feeding axis for a tree or log and a movably fixed tilt bracket 34 which is attachable to a crane 12 of a working machine. The frame 36 contains all necessary parts and devices to ensure the operation of the harvester head module 20, such as controllers, hydraulic hubs, lines, motor, and valves. It further comprises feeding arms 24 rotatably holding the feeding wheels 26 so that these can be pushed against the tree stem surface. Above the feeding wheels 26 are the upper knives 22 or upper delimbing knives and below are the lower knives 30 which are controlled by hydraulic actuators usually but may also be controlled by electric actuators or motors. At the bottom of the frame 36 the saw blade 28 is placed below the lower knives 30.

During cutting operation, the upper 22 and lower knives 30 are closed around the stem. The harvester head module 20 may only have upper 22 or lower knives 30, this does not change the operation procedure. Further, the harvester head module 20 may have more than two feeding wheels 26, such as four, which also does not alter the process or use of this invention.

The electric motor and the braking mechanism are a part of the actuating mechanism of the knives 22, 30. The electric motor can be applied to move the knives 22,30 around the tree stem. If the electric motor actuates the knives 22, 30, the electric motor is accommodated in the chassis 36 of the harvester head module 20 together with the braking mechanism. The electric motor is thus used to close the knives 22, 30 around the tree stem, until the curved surface of the knives 22, 30 make contact with the surface of the tree stem.

When the felling and cutting operation of the forest vehicle 10 is ongoing, the harvester head module 20 holds the tree stem or log in a fixed position during the cutting operation of the saw 28. In this work period the electric motor driving the knives 22, 30 must ensure enough torque to hold the log immovable in place. The braking mechanism is applied in these periods to eliminate the necessary torque supply of the electric motor.

Further the electric motor has to keep the knives 22, 30 in a contact position while the log is movably held inside the harvester head module 20 when the feeding wheels 26 are active. The braking mechanism can thus be applied in short time periods when the tree stem or log does not show an incline in its diameter or during the cutting operation, when the log is held in a fixed position inside the harvester head module 20.

The electric motor and the braking mechanism can be controlled by a control unit inside the cabin of the harvester vehicle 10. Especially during the feeding and cutting operation, the operator is relieved of manually applying the brake when the tree log or stem is stopped in its current position, resulting in a reduced workload and less fatigue. Having the braking mechanism installed reduces heat stress in the electric motor and avoids the provision of a cooling system in the harvester head module 20.

Between the electric motor and the actuating mechanism for the knives 22, 30 a gear section can be provided to reduce the necessary torque of the electric motor. The gear section may be arranged so that the brake mechanism is in between the power train from the electric motor to the gear section. Also, the gear section can be provided so that the brake mechanism is separate from a direct power train to the electric motor.

For power supply of the electric motor and the brake mechanism, the harvester head module 20 may comprise an inverter on the chassis 36 or the inverter may be provided on the forest vehicle 10.

## Claims

1. Harvester head module (20), comprising
a chassis (36),
actuated movable knives (22, 30), movably attached to the chassis (36), adapted to grab and debranch a tree stem,
at least two actuated feeding wheels (26), movably attached to the chassis (36), adapted to move around an axis relative to the chassis (36) and to rotate around a center axis, and to contact a surface of the stem and to move the stem relative to the chassis (36),
an actuated chain saw (28), movably attached to the chassis (36), adapted to cut the stem,
**characterized in that** at least one actuating mechanism of the knives (22, 30) comprises an electric motor and a brake mechanism, the brake mechanism adapted to hold the actuating mechanism (32) in a fixed position, when the electric motor is not powered, wherein the brake mechanism is a disc brake mechanism.

2. Harvester head module (20) according to claim 1,
wherein the knife actuating mechanism comprises a gear section.

3. Harvester head module (20) according to claim 2,
wherein the brake mechanism is between the gear section and the electric motor of the knife actuating mechanism.

4. Harvester head module (20) according to any of the previous claims,
wherein the brake mechanism and the electric motor are adapted to be controlled by a control module of the harvester head module (20).

## Patentansprüche

1. Erntevorsatzmodul (20), umfassend
ein Fahrgestell (36);
betätigbare bewegliche Messer (22, 30), die beweglich am Fahrgestell (36) angebracht und dazu ausgeführt sind, einen Baumstamm zu ergreifen und zu entasten,
mindestens zwei betätigbare Zuführräder (26), die beweglich am Fahrgestell (36) angebracht und dazu ausgeführt sind, sich relativ zum Fahrgestell (36) um eine Achse zu bewegen und sich um eine Mittelachse zu drehen sowie eine Oberfläche des Stamms zu berühren und den Stamm relativ zum Fahrgestell (36) zu bewegen,
eine betätigbare Kettensäge (28), die beweglich am Fahrgestell (36) angebracht und dazu ausgeführt ist, den Stamm zu schneiden,
**dadurch gekennzeichnet, dass** mindestens ein Betätigungsmechanismus der Messer (22, 30)
einen Elektromotor und einen Bremsmechanismus umfasst, wobei der Bremsmechanismus dazu ausgeführt ist, den Betätigungsmechanismus (32) in einer festen Position zu halten, wenn der Elektromotor nicht mit Strom versorgt wird,
wobei der Bremsmechanismus ein Scheibenbremsmechanismus ist.

2. Erntevorsatzmodul (20) nach Anspruch 1,
wobei der Messerbetätigungsmechanismus einen Getriebeabschnitt umfasst.

3. Erntevorsatzmodul (20) nach Anspruch 2,
wobei sich der Bremsmechanismus zwischen dem Getriebeabschnitt und dem Elektromotor des Messerbetätigungsmechanismus befindet.

4. Erntevorsatzmodul (20) nach einem der vorhergehenden Ansprüche,
wobei der Bremsmechanismus und der Elektromotor dazu ausgeführt sind, durch ein Steuermodul des Erntevorsatzmoduls (20) gesteuert zu werden.

## Revendications

1. Module de tête d'abattage (20) comprenant
un châssis (36),
des couteaux mobiles actionnés (22, 30), fixés de manière mobile au châssis (36), adaptés pour saisir et débiter une tige d'arbre,
au moins deux roues d'alimentation actionnées (26), fixées de manière mobile au châssis (36), adaptées à se déplacer autour d'un axe par rapport au châssis (36) et à tourner autour d'un axe central, et à venir en contact avec une surface de la tige et à déplacer la tige par rapport au châssis (36),
une scie à chaîne actionnée (28), fixée de manière mobile au châssis (36), adaptée pour couper la tige,
**caractérisé en ce qu'**au moins un mécanisme d'actionnement des couteaux (22, 30) comprend
un moteur électrique et un mécanisme de frein, le mécanisme de frein étant adapté pour maintenir le mécanisme d'actionnement (32) dans une position fixe, lorsque le moteur électrique n'est pas alimenté,
le mécanisme de frein étant un mécanisme de frein à disque.

2. Module de tête d'abattage (20) selon la revendication 1,
le mécanisme d'actionnement de couteau comprenant une section d'engrenage.

3. Module de tête d'abattage (20) selon la revendication 2,
le mécanisme de frein étant situé entre la section d'engrenage et le moteur électrique du mécanisme d'actionnement de couteau.

4. Module de tête d'abattage (20) selon l'une quelconque des revendications précédentes,
le mécanisme de frein et le moteur électrique étant adaptés pour être commandés par un module de commande du module de tête d'abattage (20).
